# EUROPEAN PATENT APPLICATION

(11) **EP 2 187 594 A1**
(43) Date of publication of application: **19.05.2010**
(21) Application number: 08305807.3
(22) Date of filing: 18.11.2008
(51) Int. Cl.: H04L 29/06

(54) **Open content distribution platform for media delivery systems**

(71) Applicant: Alcatel Lucent, 75008 Paris (FR)
(72) Inventor: Anantharaman, Subramanian A3, 2nd Floor, 'SRS Honey Homes', 560017, BANGALORE (IN)
(74) Representative: Korakis-Ménager, Sophie

(57) **Abstract**

A method and system for providing an open content distribution platform (103) for media delivery systems is disclosed. The platform acquires, processes, indexes and stores content form a plurality of content providers (101) and distributes the content to service providers (104), for instance, IPTV service providers, Mobile TV service providers, as per requirements. The method includes a content acquisition server (207) acquiring content from a plurality of content providers, delivering content to a content processing system (209), the content processing system performing content encoding and content metadata creation using a content processing logic (212), indexing, processing and storing processed content and metadata in storage servers (216) and rendering content and said content metadata in preferred format to said plurality of end-users using said IPTV/Mobile TV on request.

## Description

### BACKGROUND

### Technical Field

The embodiments herein generally relate to data communication and, more particularly, to media distribution services.

### Description of the Related Art

With significant high-speed broadband and wireless penetration levels, newer technologies are being developed for high data rates on both wire line and wireless air interfaces. Consequently, more and more traditional and new generation TV programming and video content is being featured over the internet by streaming or delivering-on-demand. A number of telecommunication service providers are investing in media delivery services like Internet Protocol Television (IPTV) & Mobile TV.

Currently, the implementations for media acquisition and delivery in services like IPTV/Mobile TV do not have a unified platform for rendering media distribution functions. Both IPTV systems and Mobile TV employs different techniques for accessing and delivering content to the service providers. Furthermore, the number and variety of television channels the service providers of these systems can deliver to users are limited by the content available to the particular service provider. The service provider needs to collaborate with content distributors, news broadcast providers and other media distributors to deliver content to end-users. In addition, current implementations of IPTV/Mobile TV do not provide complete control for end-users over the choice of television channels the users prefer to view.

Usually for the IPTV domain, forums like Alliance for Telecommunications Industry Solutions (ATIS), IPTV Interoperability Forum (IIF), and International Telecommunication Union -Telecommunication Standardization Sector (ITU-T) IPTV Focus Group develop standards and perform related technical activities that enable the interoperability, interconnection and implementation between IPTV systems and services. These forums define the methods to be used for obtaining content for IPTV service providers. Similarly, Mobile TV deployments employ different programs for acquiring content from content providers or content aggregators or other third parties.

The content distribution function in media delivery systems is interoperable only within the technology it is based on. Also, these technologies being user-centric and entertainment driven, content needs to be independent of the technology used to deliver content to the user. However, the existing systems provide access only to content made available by particular service providers thereby limiting access to contents available through other service providers or systems.

### SUMMARY

In view of the foregoing, an embodiment herein provides a method of creating an open content distribution platform for providing media access for media distribution systems delivering contents to a plurality of end-users, wherein the plurality of end-users accesses the content using at least one of an internet Protocol Television (IPTV) system or Mobile TV system. The method includes a content acquisition server acquiring the content from a plurality of content providers, delivering content to a content processing system, the content processing system performing content encoding and creating metadata related to the content, indexing and processing content and content metadata, storing the processed content in a content storage server, storing the processed content metadata in a metadata index server, a plurality of service providers retrieving the content and the content metadata from the content storage server and metadata index server through an IPG server by sending a content retrieval request to a content retrieval system and rendering the content and the content metadata in preferred format to the plurality of end-users using the IPTV/Mobile TV. The content processing system includes a content processing logic based on which the content processing system performs content encoding, content metadata creation, and content indexing and processing. The content comprises of at least one of standardized content and metadata associated to the content sourced from plurality of content providers, content sourced from plurality of content providers comprising of non-standardized content without associated metadata and user-generated content. An Interactive Program Guide (IPG) server is updated with the content metadata received from the standardized content from the content provider. The content metadata is tagged to the non-standardized content and the user-generated content for content indexing and updating the content metadata index and IPG server. The content right objects provided by the plurality of content provider are maintained by a Digital Rights Management (DRM) server. A content retrieval system handles requests from the plurality of service providers for retrieving the content and the meta-data from the content storage server. A transcoding server converts the content to a format required for plurality of end-users using Mobile TV or IPTV based on service context and user profiles. The platform further comprises of an authentication, billing and security server, wherein the server perform at least one of authenticating the content retrieval requests from the plurality of service providers, handling billing data, and providing secure content transmission between the platform and the plurality of service providers.

Embodiments herein further disclose a system for providing media access for media distribution systems delivering contents to a plurality of end-users, wherein the plurality of end-users accessing the content using at least one of an internet Protocol Television (IPTV) system and Mobile Television (TV) system. The system comprises a content acquisition server for monitoring and acquiring content from a plurality of content providers, a content processing system performing encoding of the content and creating metadata associated to the content based on a content processing logic, a Digital Rights Management Server (DRM) server maintaining the content objects provided by the plurality of content providers, a content storage server storing indexed and processed the content, a metadata index server storing indexed and processed the metadata associated to the content, a content retrieval system handling request from the plurality of service providers for retrieving the content and the metadata, a transcoding server converting the content to a format desirable for the plurality of end-users based on service context and user profiles, and the content retrieval system delivering the content to the plurality of end-users. The system further comprises an Authentication, Security and Billing server, the server comprising at least one means adapted for authenticating the content retrieval requests from the plurality of service providers, handling billing data, and providing secure content transmission between the platform and the plurality of service providers. The content processing system includes at least one of a content processing server and a content encoding server and content processing rules based on which the content is processed.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:

FIG. 1 is a block diagram depicting the operational context of a content distribution platform in media delivery systems in a data-communication network, according to an embodiment herein;

FIG. 2 illustrates a block diagram depicting the architecture of an open content distribution platform for media delivery systems in a data-communication network, according to an embodiment herein;

FIG. 3 is an exemplary illustration of an open content distribution platform integrated with an internet Protocol Television (IPTV) service provider network, according to an embodiment herein; and

FIG. 4 illustrates a flowchart depicting a method of providing a content distribution platform for media delivery systems in a data-communication network, according to an embodiment herein.

### DETAILED DESCRIPTION OF PREFERRED EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

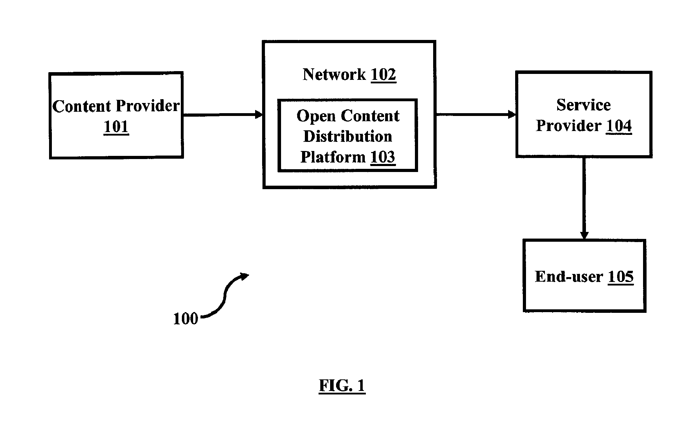

The embodiments herein achieve architecture for providing an integrated media distribution platform for rendering seamless media access for wireless and IP-based media delivery systems. Referring now to the drawings, and more particularly to FIGS. 1 through 4, where similar reference characters denote corresponding features consistently throughout the figures, there are shown preferred embodiments.

The embodiment herein discloses architecture for creating an open content platform which acquires and processes multimedia content from content providers and distributes the contents to service providers. The platform handles both stored (video-on-demand) content and broadcast (streaming) content. The platform for content acquisition, processing and distribution includes a Content Acquisition Server, Content Processing system, Content Metadata Index server, Interactive Programming Guide (IPG) server, Content Retrieval System, Content Storage server, Digital Rights Management (DRM) server, Streaming Server, a Transcoding server and an Authentication, Security and Billing server. The content acquisition server acquires content from several content providers and delivers the content to a content processing system. The content processing system encodes the content and creates meta-data using a content processing logic and then updates content metadata index server and IPG server. The processed and indexed content and metadata are then stored in content storage servers and metadata index servers. Further, content retrieval system provides the stored content and metadata in preferred format to the plurality of service providers on request.

FIG. 1 is a block diagram depicting the operational context of a content distribution platform in media delivery systems in a data-communication network, according to an embodiment herein. An open content distribution platform 103 acquires and processes multimedia content from various content providers 101 and distributes to a plurality service providers 104 according to the requirements. Content providers 101 are generally perceived to be websites or companies specialized in content creation or the like supplying different types of online information including news, entertainments, job listings and the like with regular updates. A service provider 104 is an entity providing services such as triple-play services and the like to other entities or end-users 105. The service provider 104 systems usually are composed of access networks and core or backbone networks, using a variety of network technologies. The platform 103 can be a server including several integrated servers hosted in any data-communication network 102. The platform 103 serves an integrated content distribution interface between the content providers 101 and the end users 105 providing seamless content access for both wireless and IP based media delivery systems. The platform includes content acquisition server, content encoding and storage servers, content processing -- indexing & tagging servers, Content Metadata Index & Interactive Programming Guide (IPG) server, Content Retrieval System, Content Storage server, Digital Rights Management (DRM) server, Streaming Servers, and Authentication, security and billing server. The content may include contents sourced from various content providers 101, user-generated contents stored in web-sites and the like.

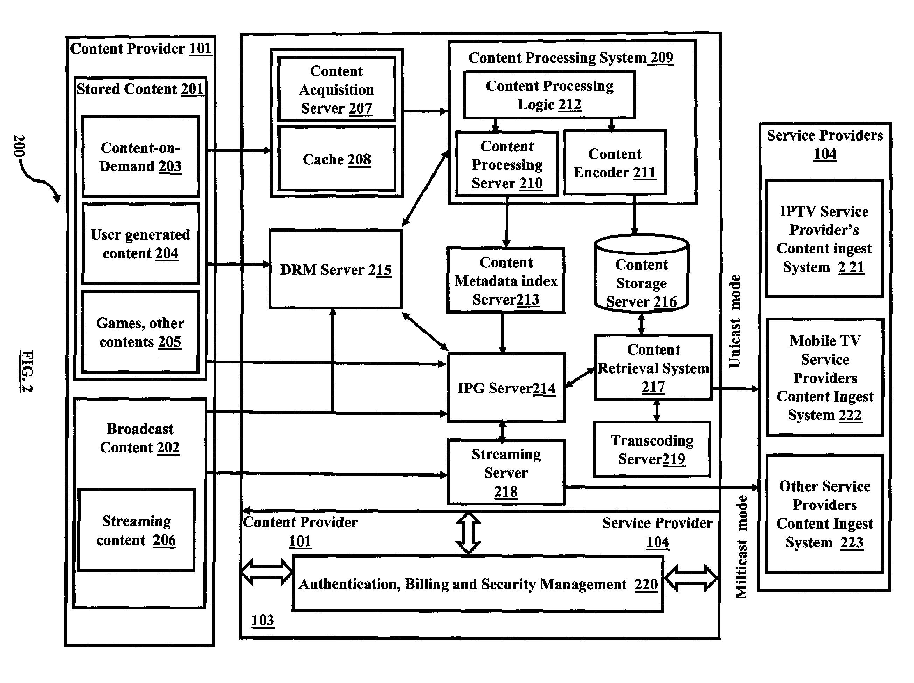

FIG. 2 illustrates a block diagram depicting the architecture of an open content distribution platform for media delivery systems in a data-communication network, according to an embodiment herein. The content distribution platform 103 includes a content acquisition server 207 with a cache 208 associated with the server 207, a content processing system 209, a content metadata index server 213, an Interactive Programming Guide (IPG) server 214, a Digital Rights Management (DRM) server 215, a content storage server 216, a content retrieval system 217, streaming server 218, a transcoding server 219 and an authentication, security and billing server 220. The content processing system 209 includes a content processing server 210 and a content encoding server 211 and a content processing logic 212. The content acquisition server 207 performs monitoring and acquiring content from various content providers 101. The content includes content sourced from regular content providers 101 comprising standardized content and associated metadata, content from content providers 101 delivering content without metadata and user generated content stored in any internet accessible media. The content providers 101 include contents in stored content format and broadcast content format. The stored content 201 can be on-demand contents 203 such as music, movies or the like, user generated contents 204, and other contents 205, for instance online games and the broadcast content 202 includes news reports and sports activities and streaming content 206, which is uninterruptedly provided by a streaming provider and normally presented to an end-user 105. The content acquisition server 207 then delivers the contents acquired from the content providers 104 and stored in the cache 208 to the content processing system 209. The content processing system 209 performs the task of content encoding and metadata creation based on the rules established by the content processing logic 212. In case of non-standard content and user generated content from content providers 101, the content is processed to obtain relevant content metadata. The content metadata is then tagged to content to make content indexing and subsequent content retrieval easier. Content metadata describes the content (e.g., EPG, Program Ratings, CODEC formats) and is applicable to multiple applications such as parental control, content preferences, screening rule, and the like. Metadata is useful for multiple applications and standardization eliminates the need to adapt individual applications for specific data provided by service providers. Further, the content processing system 209 updates content metadata index server 213 and IPG server 214. If the content received from content providers 101 is standardized content with metadata, then the IPG server 214 is directly updated with the content metadata without additional metadata processing. Content rights objects provided by the content providers 101 are maintained by the DRM server 215. DRM server 215 determines if video or multimedia content may be stored at a user terminal, copied, forwarded to another user terminal, transferred to a computer-readable medium, translated into an alternate file format and coding scheme and the like. After the content is indexed and processed, the content is then stored in content storage server 216 and the associated metadata is stored in the metadata index server 213. Subsequently, multiple service providers 104 can query and receive content metadata from the platform 103 for filling the service providers Electronic Programming Guides (EPG), where the service providers 104 can be an IPTV service provider, Mobile TV service provider or other service providers. The content retrieval system 217 in the platform handles multiple service provider 104 requests for retrieving content and metadata from the content storage server 216 and content metadata index server 213. On receiving requests for content retrieval from the service providers 104, a transcoding server 219 in the open platform 103 converts content into a format suitable to the service provider 104 based on the service context, user profiles and user device capabilities. Further, the content is transmitted in mode to all service provider destinations such as IPTV service providers content ingest system 221, Mobile TV service providers content ingest system 222, and other service providers content ingest system 223. In case of broadcasting content 202 from the content providers 10, the platform 103 uses a streaming server 218, to deliver contents to the service-providers. The content-on demand is transmitted in a unicast mode as the communication is a one-to-one communication between the network and the end-user, whereas in case of broadcast programs such as news, sports, and games, the content transmission is typically multicast. The content is actively delivered to the user at the exact data rate associated with the compressed content streams. The integrated authentication, billing and security server 220 is used for validating service provider 104 requests, handling billing data and providing secure data transmission between the content distribution platform 103 and the service provider 104. The authentication server 220 validates access requests to the content platform 103 by the service providers 104 in response to a query made by the end-user 105 to the service provider 104. The end-user 104 equipment can be a wireless handheld device, a digital set-top box or the like at the end-user 104 premises. The security server 220 ensures non-violation of policies enforced by the open content distribution platform 203, for example, users attempting to access the platform directly, brute-force attacks like multiple users attempting to request for the same content at the same time, are rejected without impacting the system performance. The billing server 220 provides service provider 104 specific billing mechanisms for certain types of content and also maintains master-records of the requests made by various service providers 104 and the revenue generated through each service provider 104. For instance, an IPTV user requesting for a particular movie through a particular service provider may be charged differently from a Mobile TV user requesting for the same movie through a wireless service provider as the processing required for the video can be different for different technologies. In an embodiment disclosed herein, an integrated authentication, security and billing server 220 perform all the functions of authentication, security and billing functions.

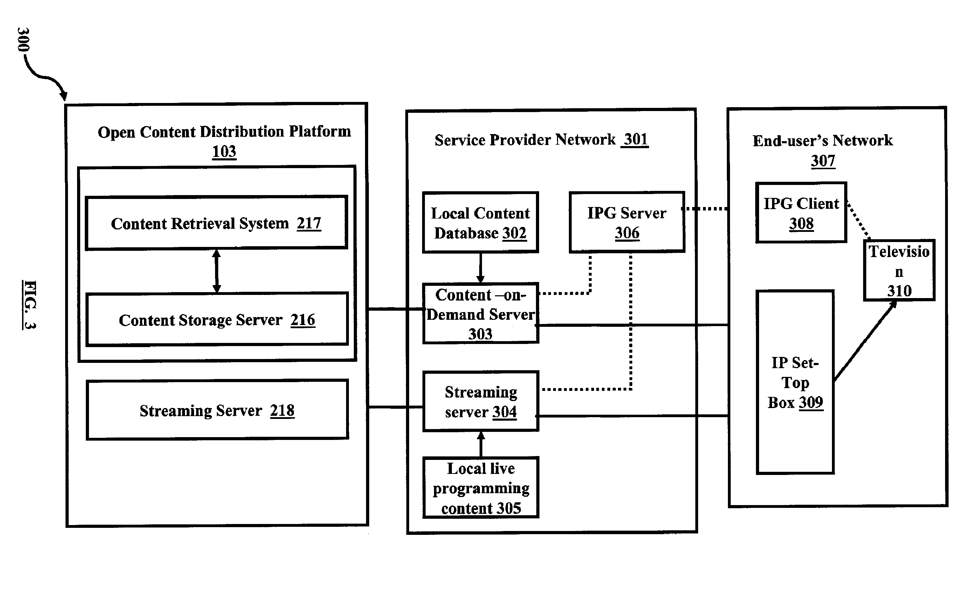

FIG. 3 is an exemplary illustration of an open content distribution platform integrated with an IPTV service provider network delivering contents to end-users, according to an embodiment herein. The service provider network 301 includes a Local Content database 302, a Content-on-Demand server 303, a streaming server 304, a local live programming content database 305, and an IPG server 306. The end-user network 307 comprises of an IPG client 308, an IP Set-Top Box (STB) 309 and a television 310. The content stored in open content distribution platform 103 and local content-on-demand database 302 is retrieved by the Content-on-Demand server 303 in the service provider's network 301. Streaming servers 304 in the service provider's network 301 receive local live broadcast content 305 and broadcast content from the streaming servers 218 in the open content platform 103. The IPG server 306 in the service provider's network 301 is then updated to contain the complete channel listing of all Content-on-Demand and broadcast content available in the entire open content distribution platform 103. In an IPTV system, IPG Server 306 is generally responsible for maintaining and distributing the IPTV content Metadata. IPTV content Metadata is machine understandable information to be consumed by the IPG user interface. IPTV content Metadata includes a common format and mechanism for the interchange of content and preference descriptors. The end user 105 can browse the channel listings on the IPG client 308 and can select the desired program from the end-user network 307. The request is sent to the IPG server 306 in the service provider's network 301, which in turn provides the required Content-on-Demand or broadcast content through the Content-on-Demand server 303 or streaming server 305. The retrieved content is then sent to an IP Set-Top box (STB) 309, which delivers the program to the user's television 310. The platform 103 enables end-users 105 to access contents which would have otherwise not been accessible through the service provider's network 301. Further, live local programming and local content-on-demand content can also be supplied by the service provider, resulting in more variety of the television programming provided.

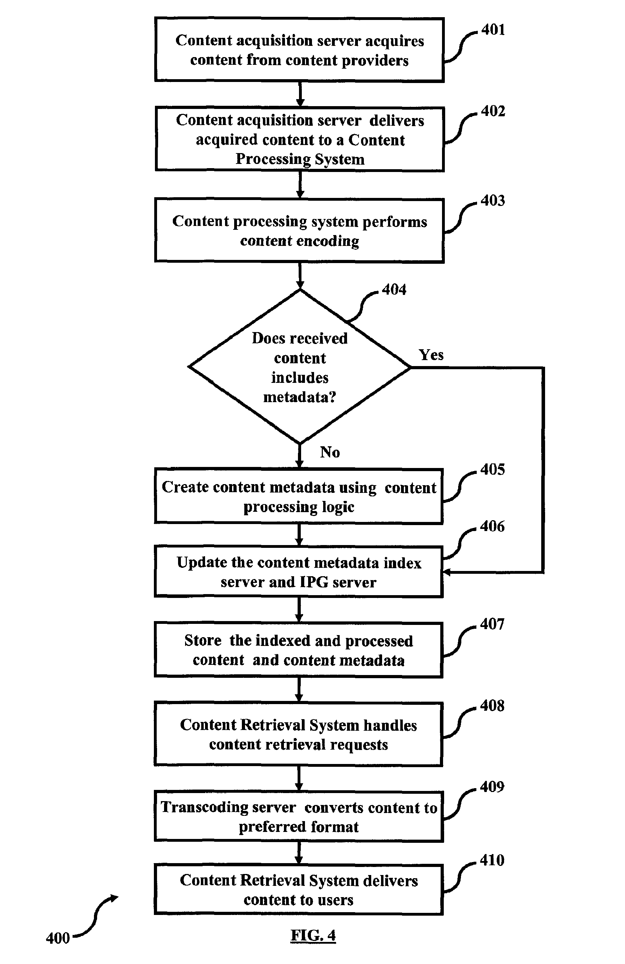

FIG. 4 illustrates a flowchart depicting a method of providing a content distribution platform for media delivery systems in a data-communication network, according to an embodiment herein. A content acquisition server 207 monitors and acquires (401) contents from a plurality of content providers 101. The content includes content sourced from regular content providers 101 comprising standardized content and associated metadata, content from content providers 101 delivering content without metadata and user generated content stored in websites. The content acquisition server 207 then delivers (402) the content acquired from the content providers 101 and to a content processing system 209. The content processing system 209 performs (403) content encoding based on the rules established by the content processing logic 212. The content processing system 209 includes a content processing server 210 and a content encoding server 211 and a content processing logic 212. The content processing system 209 then performs a check (404) to check if the content received from content providers 101 includes content metadata or not. If the content does not contain metadata, the content processing system 209 creates (405) relevant content metadata using the content processing logic 212. The relevant content metadata is then tagged to the content to make the content indexing and subsequent content retrieval easier. Further, the content processing system 209 updates (406) content metadata index server 213 and IPG server 214. If the content obtained from the content providers contains metadata, the content metadata index server 213 and the IPG server 214 are directly updated (406) with the metadata without additional content processing. The indexed and processing content is then stored (407) in content storage server 216 and the related content metadata is stored in metadata index servers 213. Thereafter, a content retrieval system 217 handles (408) content retrieval requests from service providers 104. On reception of service provider requests, a transcoding server 219 converts (409) content to a format suitable to the end-user 104. Further, the content retrieval system 217 delivers (410) the content in the preferred format to the end-user's network 307. The various actions in method 400 may be performed in the order presented, in a different order or simultaneously. Further, in some embodiments, some actions listed in FIG. 4 may be omitted.

The embodiment disclosed herein can be implemented by the content providers, service providers and network providers either independently, or in a collaborated fashion. The platform can also be implemented as an open system. Further, a consortium of content providers can also build the open content distribution platform. The platform enables content consolidation to happen within the content distribution platform and is also capable of maintaining large amounts of video/ other content within a short duration of its inception. Open platform forms a platform for new content providers to "test" the points of content delivery. Furthermore, the platform addresses all content rights issues at a single point. The platform is a preferred model since the burden of content creation, storage and distribution solely remains with the content providers.

In the embodiment disclosed herein, service providers can partner with one or more content providers to architect a platform. Also, online content aggregators can establish multiple partnerships with content owners to create an open distribution platform. The aggregators need to establish multiple content partnerships and offer on-demand or subscription-based access to various content the end-users are interested.

The embodiment disclosed herein provides a platform for the users to seamlessly access the desired video contents irrespective of the service option. The platform also provides a host of advantages to the content providers, service providers, and the end users. Increased demand for necessitated content render revenues for both content providers and service providers and providing access to potentially unlimited content makes services like IPTV and Mobile TV beneficial to consumers.

## Claims

1. A method of creating an open content distribution platform (103) for providing media access for media distribution systems delivering (410) contents to a plurality of end-users (105), wherein said plurality of end-users (105) accessing said content using at least one of an Internet Protocol Television (IPTV) (310) system or Mobile Television (TV) system said method comprising steps of:
acquiring (401) said content from a plurality of content providers (101);
delivering (402) said content to a content processing system (209), wherein said content processing system (209) includes a content processing logic;
performing (403) said content encoding and creating (405) metadata related to said content;
indexing and processing said content and said content metadata;
storing (407) said processed content in a content storage server (216);
storing (407) said processed content metadata in a metadata index server (213);
a plurality of service providers (104) retrieving said content and said content metadata from said content storage server (216) and metadata index server (213) by sending a content retrieval request to a content retrieval system; and
rendering said content and said content metadata in preferred format to said plurality of end-users (105).

2. The method as claimed in claim 1, wherein said content comprises of at least one of:
standardized said content and metadata associated to said content sourced from said plurality of content providers (101);
said content sourced from said plurality of content providers (101) comprising of non-standardized content without associated metadata; and
user-generated content.

3. The method as claimed in claim 1, wherein an Interactive Program Guide (IPG) server (214) is updated with content metadata for content indexing using said content metadata received from said standardized content from said content provider (101).

4. The method as claimed in claim 1, wherein said content metadata is tagged to said non-standardized content and said user-generated content for content indexing and updating said content metadata index server (213) and said IPG server (214).

5. The method as claimed in claim 1, wherein said content encoding and said metadata creation are performed based on said content processing logic (212) located in said content processing system (209).

6. The method as claimed in claim 1, wherein said content right objects provided by said plurality of content provider are maintained by a Digital Rights Management (DRM) (215) server.

7. The method as claimed in claim 1, wherein a content retrieval system (217) handles (408) requests from said plurality of service providers (104) for retrieving said content and said meta-data from said content storage server (216).

8. The method as claimed in claim 1, wherein a transcoding server (219) converts (409) said content to a format required for said plurality of end-users (105) based on service context and said user profiles.

9. The method as claimed in claim 1, wherein said platform (103) comprises of an Authentication, Billing and Security server (220), wherein said server (220) performing at least one of:
validating said content retrieval requests from said plurality of service providers (104);
handling billing data; and
providing secure content transmission between said platform (103) and said plurality of service providers (104).

10. A system for providing media access for media distribution systems delivering (410) contents to a plurality of end-users (105), wherein said plurality of end-users (105) accessing said content using at least one of an internet Protocol Television (IPTV) system or Mobile Television (TV) system, said system comprising:
a content acquisition server (207) adapted to monitor and acquire (401) content from a plurality of content providers (101);
a content processing system (209) adapted to (403) encode said content and create (405) metadata associated to said content based on a content processing logic (210);
a Digital Rights Management Server (DRM) (215) adapted to maintain said content objects provided by said plurality of content providers (101);
a content storage server (216) adapted to store (407) indexed and processed said content;
a metadata index server (213) adapted to store (407) indexed and processed said metadata associated to said content;
a content retrieval system (217) adapted to handle (408) requests from said plurality of service providers (104) for retrieving said content and said metadata;
a transcoding server (219) adapted to convert (409) said content to a format desirable for said plurality of end-users (105) based on service context and user profiles; and
said content retrieval system (217) adapted to deliver (410) said content to said plurality of end-users (105).

11. The system as claimed in claim 10, wherein said system further comprising an Authentication, Security and Billing server (220), said server comprising at least one means adapted to:
validate said content retrieval requests from said plurality of service providers (104);
handle billing data; and
provide secure content transmission between said platform (103) and said plurality of service providers (104).

12. The system as claimed in claim 10, wherein said content processing system (209) includes at least one of a content processing server (210) and a content encoding server (211).
